# EUROPEAN PATENT APPLICATION

(11) **EP 4 801 062 A1**
(43) Date of publication of application: **02.09.2026**
(21) Application number: 25784930.7
(22) Date of filing: 14.10.2025
(51) Int. Cl.: H04R 3/04, H04R 3/12, G06F 1/16

(54) **ELECTRONIC DEVICE INCLUDING SPEAKER AND AUDIO OUTPUT CONTROL METHOD**

(30) Priority: 18.10.2024 KR 20240142989; 03.12.2024 KR 20240177116
(71) Applicant: Samsung Electronics Co., Ltd, Suwon-si, Gyeonggi-do 16677 (KR)
(72) Inventor: CHO, Joonrae, Suwon-si, Gyeonggi-do 16677 (KR); KIM, Choonho, Suwon-si, Gyeonggi-do 16677 (KR); LEE, Myungcheol, Suwon-si, Gyeonggi-do 16677 (KR); LEE, Hunki, Suwon-si, Gyeonggi-do 16677 (KR); KIM, Kiwon, Suwon-si, Gyeonggi-do 16677 (KR)
(74) Representative: Appleyard Lees IP LLP
(86) International application number: PCT/KR2025/016117
(87) International publication number: WO 2026/084416

(57) **Abstract**

An electronic device comprising: a communication circuit, a first speaker having a resonance frequency of a first value, a second speaker having a resonance frequency of a second value, and at least one processor, wherein instructions stored in a memory, when individually or collectively executed by the at least one processor, cause the electronic device to establish a call connection with an external electronic device through the communication circuit, convert a signal received from the external electronic device into an audio signal and output the audio signal through the first speaker, and output, through the second speaker, a leakage sound cancellation signal generated by applying at least one of a phase adjustment value or an amplitude adjustment value configured for each frequency to an anti-phase signal of the audio signal within a configured frequency band while the audio signal is output through the first speaker.

## Description

### [Technical Field]

The disclosure relates to an electronic device including a speaker and a method for controlling an audio output.

### [Background Art]

Electronic devices capable of making phone calls may output the contents of the call through a speaker. When the call voice is output through the speaker, the content of the call may be leaked to a third party other than the user of the electronic device. The use of earbuds or earphones with the electronic device may prevent call content from being leaked, but additional equipment such as earbuds or earphones is required.

Generally, the electronic device may prevent the leakage of the call content by using an anti-noise cancellation (ANC) function.

The above-described information may be provided as related art for the purpose of assisting in understanding the disclosure. No assertion or decision is made as to whether any of the above might be applicable as prior art with regard to the disclosure.

The aim of the present disclosure is to provide subject-matter that improves on the prior art.

### [Disclosure of Invention]

### [Technical Problem]

According to the present invention there is provided an electronic device and a method for controlling an audio output of an electronic device as set forth in the appended claims. Other features of the invention will be apparent from the dependent claims, and the description which follows.

According to an aspect of the present disclosure, there is provided an electronic device comprising a speaker, the electronic device comprising: a communication circuit; a first speaker having a resonance frequency of a first value; a second speaker having a resonance frequency of a second value; and at least one processor, wherein instructions stored in a memory, when individually or collectively executed by the at least one processor, cause the electronic device to: establish a call connection with an external electronic device through the communication circuit; convert a signal received from the external electronic device into an audio signal and output the audio signal through the first speaker; and output, through the second speaker, a leakage sound cancellation signal generated by applying at least one of a phase adjustment value or an amplitude adjustment value configured for each frequency to an anti-phase signal of the audio signal within a configured frequency band while the audio signal is output through the first speaker.

In an embodiment, the instructions may, when individually or collectively executed by the at least one processor, cause the electronic device to delay the leakage sound cancellation signal by a configured time period and output the leakage sound cancellation signal through the second speaker.

In an embodiment, the configured frequency band may comprise a first frequency band having a lower limit value corresponding to a larger value among the first value and the second value.

In an embodiment the leakage sound cancellation signal may comprise a first leakage sound cancellation signal generated by applying at least one of a phase adjustment value or an amplitude adjustment value configured for each frequency to an anti-phase signal of the audio signal in the first frequency band while the audio signal is output through the first speaker.

In an embodiment, the configured frequency band may comprise: a second frequency band having a lower limit value greater than an upper limit value of the first frequency band; a third frequency band having an upper limit value less than a larger value among the first value and the second value and a lower limit value greater than a smaller value among the first value and the second value; and a fourth frequency band having an upper limit value less than a larger value among the first value and the second value.

In an embodiment, the leakage sound cancellation signal may comprise at least one of: a second leakage sound cancellation signal generated by applying at least one of a phase adjustment value or an amplitude adjustment value configured for each frequency to an anti-phase signal of the audio signal in the second frequency band; a third leakage sound cancellation signal generated by applying at least one of a phase adjustment value or an amplitude adjustment value configured for each frequency to an anti-phase signal of the audio signal in the third frequency band; and a fourth leakage sound cancellation signal generated by applying at least one of a phase adjustment value or an amplitude adjustment value configured for each frequency to an anti-phase signal of the audio signal in the fourth frequency band.

In an embodiment, the first speaker and the second speaker may share a single magnet and comprise different diaphragms.

In an embodiment, the first speaker and the second speaker may comprise different speakers.

In an embodiment, the electronic device may comprise a foldable housing comprising: a first housing comprising the first speaker; and a second housing connected to the first housing through a hinge and comprising the second speaker, wherein, in case that the first housing and the second housing are in a closed state, the first speaker and the second speaker are aligned with each other.

According to an aspect of the present disclosure, there is provided a method for controlling an audio output of an electronic device, the method comprising: establishing a call connection with an external electronic device through a communication circuit; converting a signal received from the external electronic device into an audio signal and outputting the audio signal through the first speaker; and outputting, through a second speaker, a leakage sound cancellation signal generated by applying at least one of a phase adjustment value or an amplitude adjustment value configured for each frequency to an anti-phase signal of the audio signal within a configured frequency band while the audio signal is output through the first speaker.

In an embodiment, the configured frequency band may comprise a first frequency band having a lower limit value corresponding to a larger value among the first value and the second value.

In an embodiment, the leakage sound cancellation signal may comprise a first leakage sound cancellation signal generated by applying at least one of a phase adjustment value or an amplitude adjustment value configured for each frequency to an anti-phase signal of the audio signal in the first frequency band while the audio signal is output through the first speaker.

In an embodiment, the configured frequency band may comprise: a second frequency band having a lower limit value greater than an upper limit value of the first frequency band; a third frequency band having an upper limit value less than a larger value among the first value and the second value and a lower limit value greater than a smaller value among the first value and the second value; and a fourth frequency band having an upper limit value less than a larger value among the first value and the second value.

In an embodiment, the leakage sound cancellation signal may comprise at least one of: a second leakage sound cancellation signal generated by applying at least one of a phase adjustment value or an amplitude adjustment value configured for each frequency to an anti-phase signal of the audio signal in the second frequency band; a third leakage sound cancellation signal generated by applying at least one of a phase adjustment value or an amplitude adjustment value configured for each frequency to an anti-phase signal of the audio signal in the third frequency band; and a fourth leakage sound cancellation signal generated by applying at least one of a phase adjustment value or an amplitude adjustment value configured for each frequency to an anti-phase signal of the audio signal in the third frequency band.

According to an aspect of the present disclosure, there is provided an electronic device comprising: a first speaker having a resonance frequency of a first value; a second speaker having a resonance frequency of a second value different from the first value; and at least one processor, wherein the at least one processor is configured to reproduce, through the second speaker, a first leakage sound cancellation signal generated by applying a phase adjustment value preconfigured for each frequency to an anti-phase signal of an audio signal within a preconfigured first frequency band while the audio signal is output through the first speaker, and wherein the first frequency band has a lower limit value greater than one of the first value and the second value.

In an embodiment, the at least one processor may be configured to generate the first leakage sound cancellation signal by further applying an amplitude adjustment value preconfigured for each frequency to an anti-phase signal of the audio signal within the first frequency band.

In an embodiment, the at least one processor may be configured to not reproduce a signal in a frequency band lower than one of the first value and the second value through the second speaker while the audio signal is output through the first speaker.

In an embodiment, the first speaker and second speaker may have an integrated structure sharing a single magnet, or wherein the portable electronic device is a foldable device comprising a first housing and a second housing connected to each other through a hinge, the first speaker being included in the first housing, the second speaker being included in the second housing, and the first speaker and the second speaker being aligned with each other in case that the first housing and the second housing are in a closed state.

In an embodiment, the at least one processor may be configured to further reproduce, through the second speaker, at least one of: a second leakage sound cancellation signal generated by applying a phase adjustment value preconfigured for each frequency to an anti-phase signal of the audio signal within a preconfigured second frequency band having a lower limit value greater than an upper limit value of the first frequency band; a third leakage sound cancellation signal generated by applying a phase adjustment value preconfigured for each frequency to an anti-phase signal of the audio signal within a preconfigured third frequency band having an upper limit value less than a larger value among the first value and the second value and a lower limit value greater than a smaller value among the first value and the second value; and a fourth leakage sound cancellation signal generated by applying a phase adjustment value preconfigured for each frequency to an anti-phase signal of the audio signal within a preconfigured fourth frequency band having an upper limit value less than the smaller value among the first value and the second value.

According to an aspect of the present disclosure, there is provided an electronic device comprising: a first speaker having a resonance frequency of a first value; a second speaker having a resonance frequency of a second value different from the first value; and at least one processor, wherein the at least one processor is configured to, while the electronic device is in a call mode and the portable electronic device converts a signal received from another electronic device into an audio signal and outputs the audio signal through the first speaker, reproduce, through the second speaker, a first leakage sound cancellation signal generated by applying a phase adjustment value preconfigured for each frequency to an anti-phase signal of the audio signal within a preconfigured first frequency band.

### [Brief Description of Drawings]

With regard to the description of the drawings, the same or like reference signs may be used to designate the same or like elements. The subject-matter of the present disclosure is best understood with reference to the accompanying figures, in which:
FIG. 1 is a block drawing of an exemplary electronic device capable of performing operations described within the disclosure according to one or more embodiments;
FIG. 2 is a drawing illustrating components included in an electronic device according to an embodiment of the disclosure;
FIG. 3 is a drawing illustrating an electronic device including a third speaker;
FIG. 4A is a perspective drawing of the third speaker of FIG. 3 viewed from a first direction;
FIG. 4B is a perspective drawing of the third speaker of FIG. 3 viewed from a second direction;
FIG. 4C is a sectional drawing illustrating the third speaker of FIG. 4A cut in an A-B direction;
FIG. 4D is a sectional drawing illustrating the third speaker of FIG. 4A cut in a C-D direction;
FIG. 5 is a flowchart illustrating a method for controlling an audio output of an electronic device according to an embodiment of the disclosure.
FIG. 6 is a drawing illustrating an audio signal processing circuit;
FIG. 7 is a graph illustrating a result of adjusting a phase of speakers having different resonance frequencies;
FIG. 8 is a graph illustrating a measurement result of an audio signal measured by outputting a first leakage cancellation signal in a first frequency band by an electronic device;
FIG. 9A is a schematic drawing illustrating an unfolded state of a multi-foldable electronic device as viewed from the front;
FIG. 9B is a schematic drawing illustrating an unfolded state of a multi-foldable electronic device as viewed from the rear;
FIG. 9C is a drawing schematically illustrating a folded state of a first housing, a second housing, and a third housing of a multi-foldable electronic device;
FIG. 10A is a front perspective drawing of a foldable electronic device in a fully unfolded state;
FIG. 10B is a rear perspective drawing of a foldable electronic device in an unfolded state;
FIG. 10C is a front perspective drawing of a foldable electronic device in a fully folded state;
FIG. 10D is a perspective drawing of a rear surface of a foldable electronic device in a folded state as viewed from various directions.

### [Mode for the Invention]

Generally, when using two speakers having an identical resonance frequency, the use of a speaker having a low output may cause the call quality to be degraded, and the use of a speaker having a high output may cause difficulty in securing installation space. The use of two speakers with different resonance frequencies restricts a cancellation bandwidth, thereby making it difficult to prevent leakage of call contents. Speakers that are different in size to each other may cause a difference in resonance frequencies between the speakers. Therefore this problem subsists in electronic devices with two different size speakers.

The electronic device including a speaker and the method for controlling an audio output of the disclosure have an aim to prevent call leakage by using speakers having different resonance frequencies.

The electronic device including a speaker and the method for controlling an audio output of the disclosure may output an anti-phase signal by using speakers having different resonance frequencies so as to prevent deterioration of speaker performance and secure an installation space.

Features described with reference to one embodiment may be combined with features from another embodiment without introducing new subject-matter.

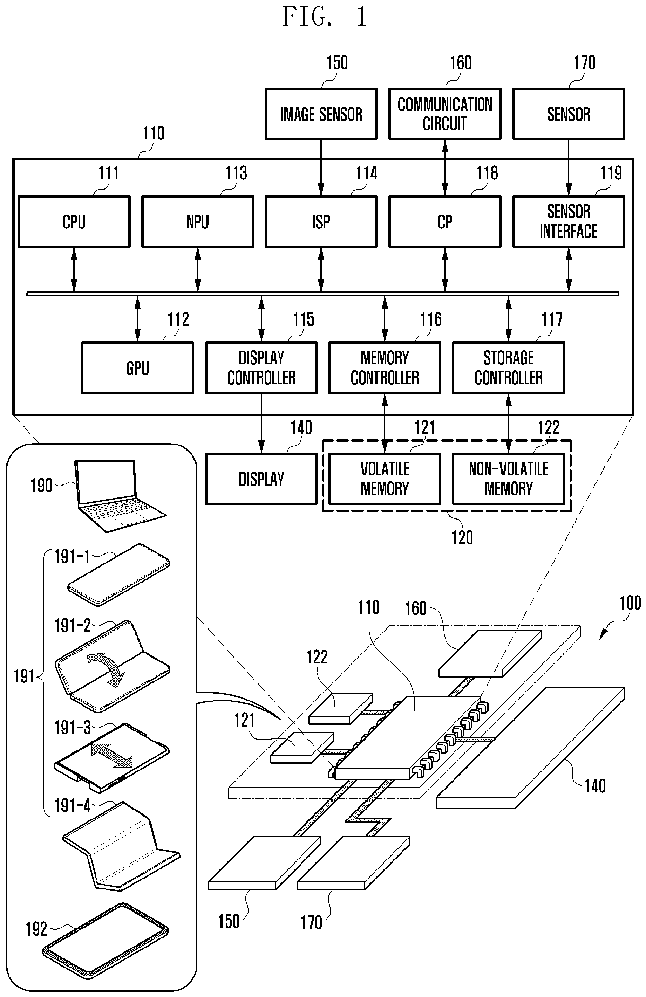

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

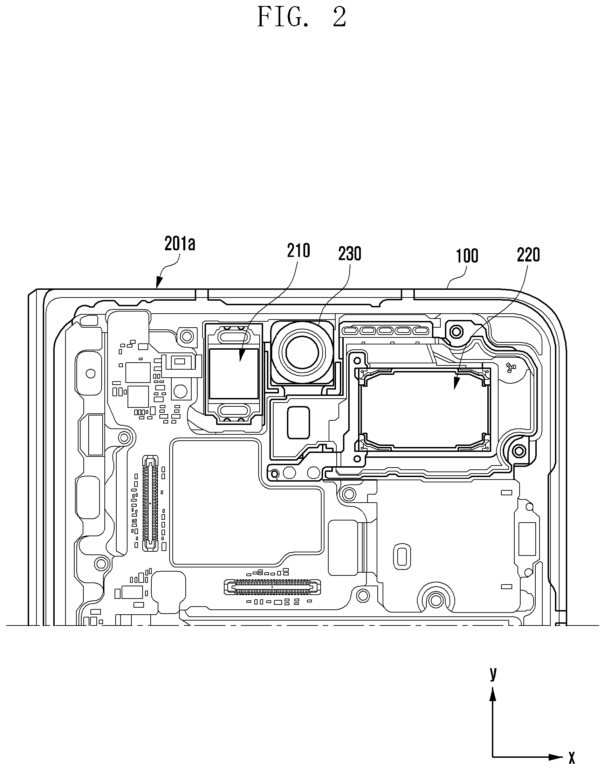

FIG. 2 is a drawing illustrating components included in an electronic device 100 according to an embodiment of the disclosure.

In an embodiment, the electronic device 100 may include a housing 201a, a first speaker 210, a second speaker 220, and a camera 230. For example, the first speaker 210 and the second speaker 220 may be arranged at both sides based on the camera 230. The first speaker 210 may have a resonance frequency of a first value. The second speaker 220 may have a resonance frequency of a second value. For example, the first value and the second value may be different from each other.

In an embodiment, the first speaker 210, the second speaker 220, and the camera 230 may be arranged in the housing 201a of the electronic device 100.

In an embodiment, the electronic device 100 may include a speaker system of the electronic device 100 based on the first speaker 210 and the second speaker 220. In other words, the speaker system may include the first speaker 210 and the second speaker 220. The performance of the speaker system of the electronic device 100 may vary based on at least one of the performance of the first speaker 210 and/or the second speaker 220, or the volume of the components (first speaker 210, second speaker 210 and camera 230) within the housing 201a or the volume of the housing 201a.

In an embodiment, the first speaker 210 may include a speaker having a first volume. The second speaker 220 may include a speaker having a second volume. The first volume and the second volume may be different from each other.

In an embodiment, the first speaker 210 may have a sensitivity of a first specific value. The second speaker 220 may have a sensitivity of a second specific value. For example, in a speaker or speaker system, sensitivity refers to the ratio of the sound output to the power input to the speaker, and is related to speaker performance.

In an embodiment, the first speaker 210 may include a diaphragm having a first area. The second speaker 220 may include a diaphragm having a second area. For example, the first area and the second area may be different from each other.

In an embodiment, the first speaker 210 may be configured to leak a rear surface sound to the outside of electronic device 100. The front and rear sounds of the first speaker 210 are mixed, and phase interference may reduce leakage noise in some frequency bands, while the remaining band leakage sound may be removed by the second speaker 220.

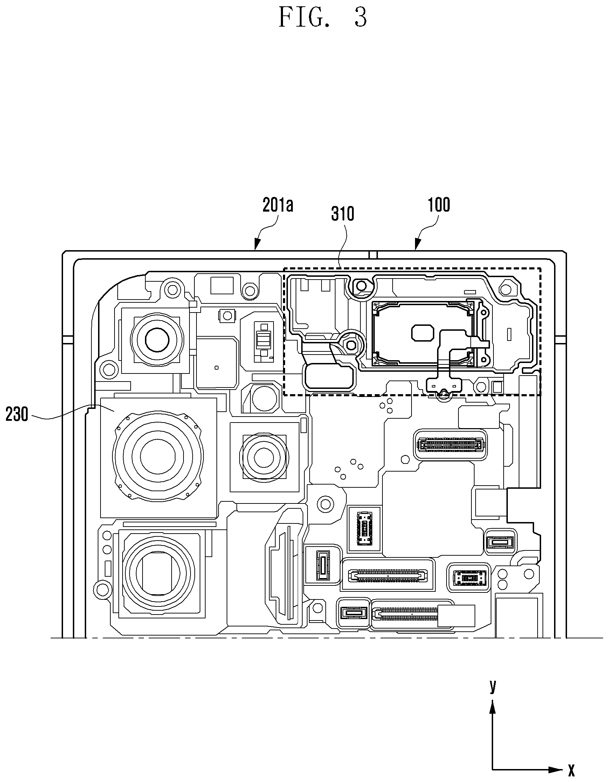

FIG. 3 is a view illustrating an electronic device 100 including a third speaker 310 according to an embodiment of the disclosure.

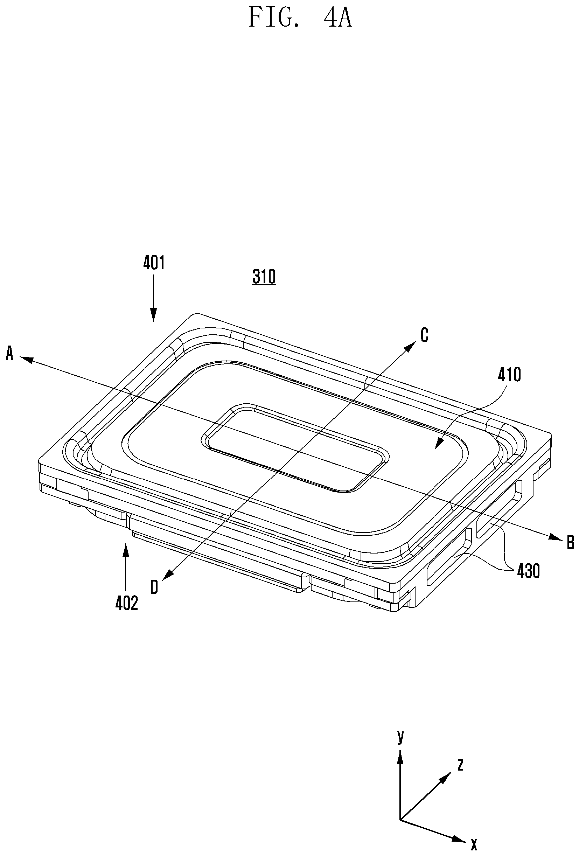

FIG. 4A is a perspective drawing of the third speaker 310 of FIG. 3 viewed from a first direction 401.

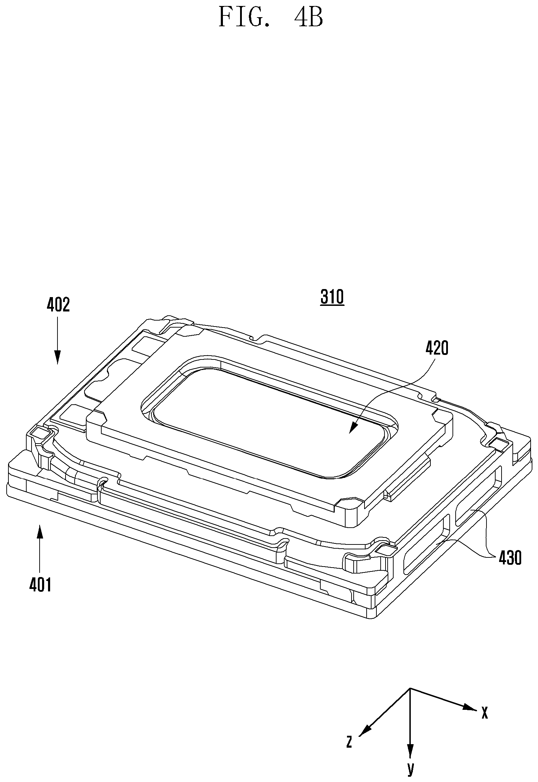

FIG. 4B is a perspective drawing of the third speaker 310 of FIG. 3 viewed from a second direction 402.

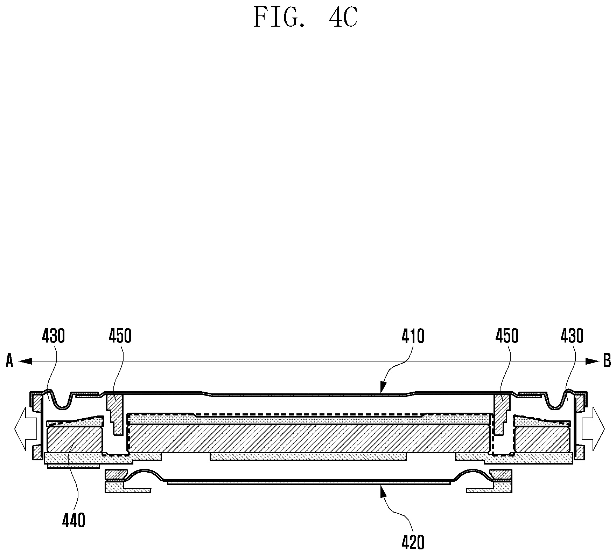

FIG. 4C is a sectional drawing illustrating the third speaker 310 of FIG. 4A cut in an A-B direction.

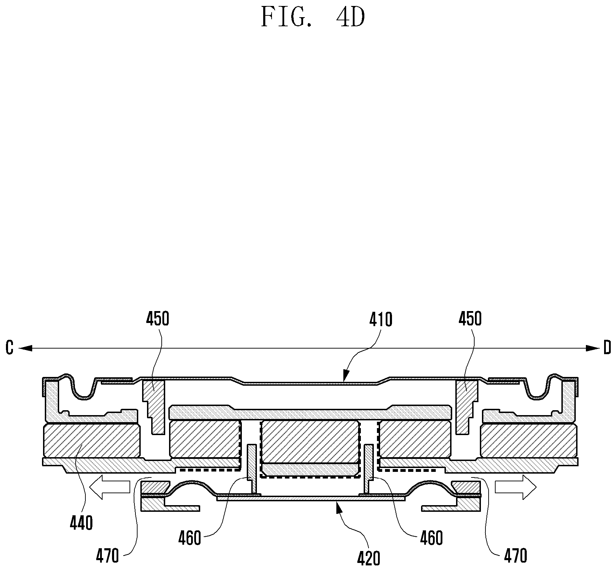

FIG. 4D is a sectional drawing illustrating the third speaker 310 of FIG. 4A cut in a C-D direction.

Referring to FIGS. 3, 4A, 4B, 4C, and 4C, the electronic device 100 may include a housing 201a, a third speaker 310, and a camera 230. In an embodiment, the third speaker 310 and the camera 230 may be arranged in the housing 201a of the electronic device 100.

In an embodiment, the third speaker 310 may include at least two diaphragms 410 and 420. The third speaker 310 may include a magnet 440, a first diaphragm 410, a second diaphragm 420, a first coil 450, and a second coil 460. The third speaker 310 may output a sound generated by the first diaphragm 410 to the outside of the third speaker 310 through a first pipe 430. The third speaker 310 may output a sound generated by the second diaphragm 420 to the outside of the third speaker 310 through a second pipe 470.

In an embodiment, the first diaphragm 410 and the second diaphragm 420 may have different areas. The first diaphragm 410 and the second diaphragm 420 may share the magnet 440 but operate as separate speakers. The first diaphragm 410 and the second diaphragm 420 may be integrated with the third speaker 310 sharing the magnet 440 and/or a housing of the third speaker 310. In an embodiment, the first diaphragm 410, the first coil 450, and the magnet 440 may operate as a first speaker circuit or a fourth speaker, and the second diaphragm 420, the second coil 460, and the magnet 440 may operate as a second speaker circuit or a fifth speaker.

In an embodiment, the first speaker circuit including the first diaphragm 410 or the fourth speaker including the first diaphragm 410 may have a resonance frequency of a first value. The second speaker circuit including the second diaphragm 420 or the fifth speaker including the second diaphragm 420 may have a resonance frequency of a second value. For example, the first value and the second value may be different from each other.

The performance of the speaker system of the electronic device 100 may vary based on at least one of the performances of the third speaker 310, or the volume of the housing 201a.

In an embodiment, the first speaker circuit including the first diaphragm 410 or the fourth speaker including the first diaphragm 410 may have a first volume. The second speaker circuit including the second diaphragm 420 or the fifth speaker including the second diaphragm 420 may have a second volume. The first volume and the second volume may be different from each other.

In an embodiment, the first speaker circuit including the first diaphragm 410 or the fourth speaker including the first diaphragm 410 may have a sensitivity of a first specific value. The second speaker circuit including the second diaphragm 420 or the fifth speaker including the second diaphragm 420 may have a sensitivity of a second specific value.

In FIGS. 2, 3, 4A, 4B, 4C, and 4D, the electronic device 100 is illustrated with reference to the bar-type smartphone 191-1 in FIG. 1 to describe the speakers 210, 220, and 310 included in the electronic device 100, but the disclosure is not limited thereto.

In an embodiment, the electronic device 100 may include the foldable type smartphone 191-2 or the multi-foldable type electronic device 191-4 in FIG. 1. The foldable type smartphone 191-2 and/or the multi-foldable type electronic device 191-4 may include a first housing (not shown) including a first speaker 210, a second housing (not shown) including a second speaker 220, and a foldable housing (not shown) including a hinge (e.g., a free-stop hinge) (not shown) connecting the first housing (not shown) and the second housing (not shown) and capable of being folded or unfolded. The first speaker 210 and the second speaker 220 included in the foldable type smartphone 191-2 and/or the multi-foldable type electronic device 191-4 may be aligned with each other when the foldable housing (not shown) is closed or folded.

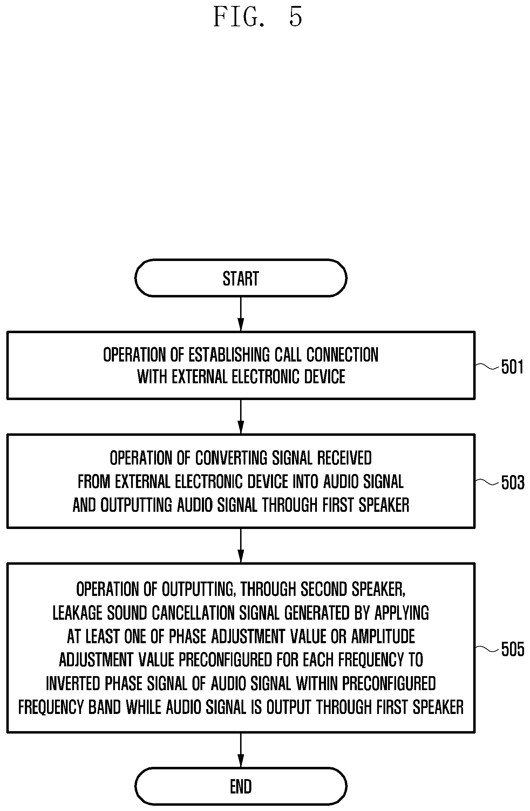

FIG. 5 is a flowchart illustrating a method for controlling an audio output of an electronic device 100 according to an embodiment of the disclosure.

In an embodiment, the electronic device 100 may store instructions in the memory 120 for the method for controlling the audio output of FIG. 5.

According to an embodiment, in operation 501, the instructions, when individually or collectively executed by the at least one processor 110, may cause the electronic device 100 to establish a call connection with an external electronic device through the communication circuit 150.

According to an embodiment, in operation 503, the instructions, when individually or collectively executed by the at least one processor 110, may cause the electronic device 100 to convert a signal received from an external electronic device into an audio signal and output the audio signal through the first speaker (e.g., the first speaker 210, or the fourth speaker or the first speaker circuit of the third speaker 310). The signal may be a voice received from the external electronic device and/or a call tone.

According to an embodiment, in operation 503, the instructions, when individually or collectively executed by the at least one processor 110, may cause the electronic device 100 to determine that the electronic device 100 establishes a call operation when the call connection with the external electronic device has been established and may be switched to a call mode.

According to an embodiment, in operation 505, the instructions, when individually or collectively executed by the at least one processor 110, may cause the electronic device 100 to output, through the second speaker (e.g., the second speaker 220 or the fifth speaker or the second speaker circuit of the third speaker 310), a leakage sound cancellation signal generated by applying at least one of a phase adjustment value or an amplitude adjustment value configured for each frequency to an anti-phase signal of an audio signal within a configured frequency band while the audio signal is output through the first speaker (e.g., the first speaker 210, and the fourth speaker or the first speaker circuit of the third speaker 310).

According to an embodiment, in operation 505, the instructions, when individually or collectively executed by the at least one processor 110, may cause the electronic device 100 to generate an anti-phase signal of an audio signal.

In an embodiment, the electronic device 100 may include a microphone. According to an embodiment, in operation 505, the instructions, when individually or collectively executed by the at least one processor 110, may cause the electronic device 100 to generate an anti-phase signal of an audio signal based on a signal received through the microphone.

According to an embodiment, in operation 505, the instructions, when individually or collectively executed by the at least one processor 110, may cause the electronic device 100 to generate a leakage sound cancellation signal by applying at least one of a phase adjustment value or an amplitude adjustment value configured for each frequency to the generated anti-phase signal.

According to an embodiment, in operation 505, the instructions, when individually or collectively executed by the at least one processor 110, may cause the electronic device 100 to delay the generated leakage sound cancellation signal for a configured time period and output the generated leakage sound cancellation signal through the second speaker (e.g., the second speaker 220 or the fifth speaker or the second speaker circuit of the third speaker 310). For example, the configured time period may include a time period for generating the leakage sound cancellation signal based on the audio signal. Using time delay may minimize sound leakage during a call.

According to an embodiment, in operation 505, the instructions, when individually or collectively executed by the at least one processor 110, may cause the electronic device 100 to output, through the second speaker (e.g., the second speaker 220 or the fifth speaker or the second speaker circuit of the third speaker 310), a first leakage sound cancellation signal generated by applying at least one of a phase adjustment value or an amplitude adjustment value configured for each frequency to an anti-phase signal of an audio signal within a first frequency band, while the audio signal is output through the first speaker (e.g., the first speaker 210, or the fourth speaker or the first speaker circuit of the third speaker 310).

In an embodiment, the first speaker 210, the fourth speaker or the third speaker 310, or the first speaker circuit of the third speaker 310 may have a resonance frequency of a first value. The second speaker 220, the fifth speaker of the third speaker 310, or the second speaker circuit of the third speaker 310 may have a resonance frequency of a second value. A lower limit value of the configured first frequency band may be greater than one of the first value and the second value. In other words, the configured frequency band comprises a first frequency band having a lower limit value corresponding to a larger value among the first value and the second value. An upper limit value of the first frequency band may be configured in advance.

For example, in case that the first value is 600 Hz and the second value is 800 Hz, the lower limit of the first frequency band may include 800 Hz. Here, the first frequency band (bandwidth) may include an audible frequency band above 800 Hz. The first leakage sound cancellation signal may include the first frequency band. The frequency band may be a frequency band beyond the resonant frequency of the first speaker and/or the resonant frequency of the second speaker.

According to an embodiment, in operation 505, the instructions, when individually or collectively executed by the at least one processor 110, may cause the electronic device 100 to generate a leakage sound cancellation signal comprising at least one of a second leakage sound cancellation signal generated by applying at least one of a phase adjustment value or an amplitude adjustment value configured for each frequency to an anti-phase signal of an audio signal in a second frequency band, a third leakage sound cancellation signal generated by applying at least one of a phase adjustment value or an amplitude adjustment value configured for each frequency to an anti-phase signal of an audio signal in a third frequency band, and a fourth leakage sound cancellation signal generated by applying at least one of a phase adjustment value or an amplitude adjustment value configured for each frequency to an anti-phase signal of an audio signal in a fourth frequency band. The instructions, when invdividually or collectively executed by the at least one processor 110, may cause the electronic device 100 to output the generated leakage sound cancellation signal through the second speaker (e.g., the second speaker 220 or the fifth speaker or the second speaker circuit of the third speaker 310), while the audio signal is output through the first speaker (e.g., the first speaker 210, or the fourth speaker or the first speaker circuit of the third speaker 310).

In an embodiment, the first speaker 210 or the first speaker circuit of the third speaker 310 may have a resonance frequency of a first value. The second speaker 220 or the second speaker circuit of the third speaker 310 may have a resonance frequency of a second value.

For example, in case that the first value is 600 Hz and the second value is 800 Hz, the lower limit of the first frequency band may include 800 Hz. An upper limit value of the first frequency band may be configured. For example, an upper limit value of the first frequency band may be configured to be 1200 Hz. The frequency band may be a frequency band beyond the resonant frequency of the first speaker and/or the resonant frequency of the second speaker.

In an embodiment, a lower limit value of the second frequency band may be greater than the upper limit value of the first frequency band. For example, the lower limit value of the second frequency band may be greater than 1200 Hz. However, without limitation thereto, the lower limit value of the second frequency band may correspond to the lower limit value of the first frequency band. The lower limit value of the second frequency band may include the lower limit value of the first frequency band. The lower limit value of the second frequency band may be equal to the upper limit value of the first frequency band.

In an embodiment, the third frequency band may have an upper limit that is less than a larger value among the first value and the second value, and a lower limit that is larger/greater than a smaller value among the first value and the second value. For example, the third frequency band may have the upper limit value less than 800 Hz and the lower limit value greater than 600 Hz.

In an embodiment, the fourth frequency band may have an upper limit that is less than a larger value among the first value and the second value. For example, the upper limit value of the fourth frequency band may be less than 600 Hz.

According to an embodiment, in operation 505, the instructions, when individually or collectively executed by the at least one processor 110, may cause the electronic device 100 to generate a leakage sound cancellation signal by synthesizing at least one of the first leakage sound cancellation signal, second leakage sound cancellation signal, third leakage sound cancellation signal, and fourth leakage sound cancellation signal, and output the leakage sound cancellation signal through the second speaker (e.g., the second speaker 220 or the second speaker circuit).

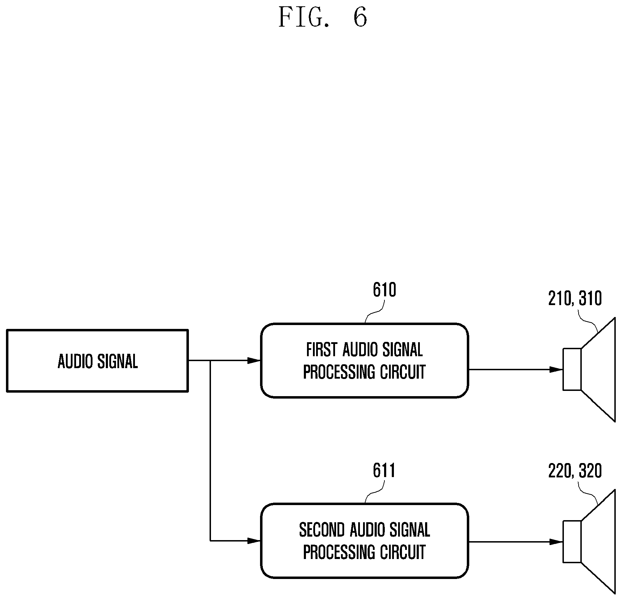

FIG. 6 is a drawing illustrating an audio signal processing circuit (e.g., a first audio signal processing circuit 610 or a second audio signal processing circuit 611) according to an embodiment of the disclosure.

In an embodiment, the electronic device 100 may include a first audio signal processing circuit 610, a second audio signal processing circuit 611, a first speaker 210, and a second speaker 220. The first speaker 210 may correspond not only to the first speaker 210 but also to the first speaker circuit of the third speaker 310 in FIG. 2. The second speaker 220 may correspond not only to the second speaker 220 but also to the second speaker circuit of the third speaker 310 in FIG. 2.

In an embodiment, the first audio signal processing circuit 610 and the second audio signal processing circuit 611 each may be realized by the processor 110. For example, the processor 110 may include the first audio signal processing circuit 610 and the second audio signal processing circuit 611.

In an embodiment, the first audio signal processing circuit 610 may process an audio signal and transfer the processed audio signal to the first speaker 210 or the first speaker circuit of the third speaker 310. The first speaker 210 or the first speaker circuit of the third speaker 310 may output the received audio signal.

In an embodiment, the first audio signal processing circuit 610 may process an audio signal and transfer the processed audio signal to the first speaker 210 or the second speaker 220. An anti-phase signal of the audio signal generated by the second audio signal processing circuit 611 may be transferred to the first speaker 210 or the second speaker 220 to be output. For example, when the audio signal generated by the first audio signal processing circuit 610 is output through the first speaker 210, the second speaker 220 may output an anti-phase signal of the audio signal generated by the second audio signal processing circuit 611. For example, when the audio signal generated by the first audio signal processing circuit 610 is output through the second speaker 220, the first speaker 210 may output an anti-phase signal of the audio signal generated by the second audio signal processing circuit 611.

In an embodiment, the second audio signal processing circuit 611 may generate an anti-phase signal of an audio signal and apply at least one of a phase adjustment value or an amplitude adjustment value configured to each frequency to the generated anti-phase signal of the audio signal so as to generate a leakage sound cancellation signal. The generated leakage sound cancellation signal may be output through the second speaker 220 or the second speaker circuit of the third speaker 310.

In an embodiment, the second audio signal processing circuit 611 may include a fast Fourier transform (FFT), at least one bandpass filter, a phase or amplitude adjustment circuit for each frequency band, an inverse fast Fourier transform (IFFT), and/or a mixing circuit. In an embodiment, the second audio signal processing circuit 611 may further include a frequency output (FO) analysis circuit. The frequency output (FO) analysis circuit may remove an echo component of an audio signal.

The fast Fourier transform (FFT), the at least one bandpass filter, the phase or amplitude adjustment circuit for each frequency band, the inverse fast Fourier transform (IFFT), the frequency output (FO) analysis circuit and/or the mixing circuit may be realized by a computer program. Instructions included in the computer program, when executed by the processor 110, may cause the electronic device 100 to perform, with respect to an audio signal, a fast Fourier transform (FFT) operation a bandpass filter operation, a phase or amplitude adjustment operation for each frequency band, an inverse fast Fourier transform (IFFT) operation, a frequency output (FO) analysis operation, and/or a mixing operation.

In an embodiment, the second audio signal processing circuit 611 may measure the performance of the first speaker 210 or the first speaker circuit of the third speaker 310, and the second speaker 220 or the second speaker circuit of the third speaker 310, and generate a leakage sound cancellation signal reflecting a delay condition, considering a delay occurring in circuit and software processing.

In an embodiment, the delay condition may be found by simultaneously reproducing orthogonal signals in the first speaker 210 or the first speaker circuit of the third speaker 310, and the second speaker 220 or the second speaker circuit of the third speaker 310.

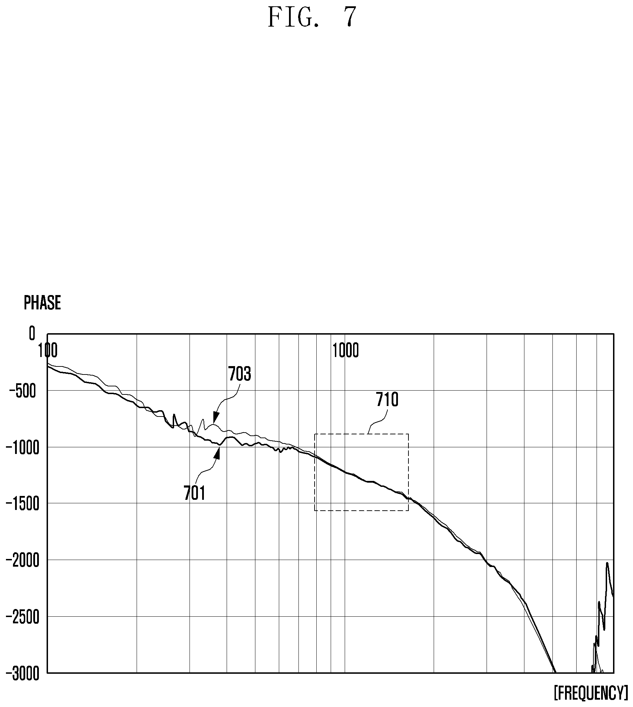

FIG. 7 is a graph illustrating a result of adjusting a phase of speakers having different resonance frequencies according to an embodiment of the disclosure.

FIG. 7 is a graph showing frequency on the x-axis and phase on the y-axis. Graph 701 shows the phase changes of the audio signal output through the first speaker 210 for each frequency, and graph 703 shows the phase changes of the audio signal output through the second speaker 220 for each frequency. The audio signal output through the first speaker 210 and the audio signal output through the second speaker 220 may differ in output (or amplitude) and phase due to differences in the resonance frequency and/or sensitivity of each speaker.

According to an embodiment, the instructions, when individually or collectively executed by the at least one processor 110, may cause the electronic device 100 to control the phase output from the first speaker 210 and the second speaker 220 to match by applying at least one of a phase adjustment value or an amplitude adjustment value configured for each frequency to an audio signal in a configured frequency band 710.

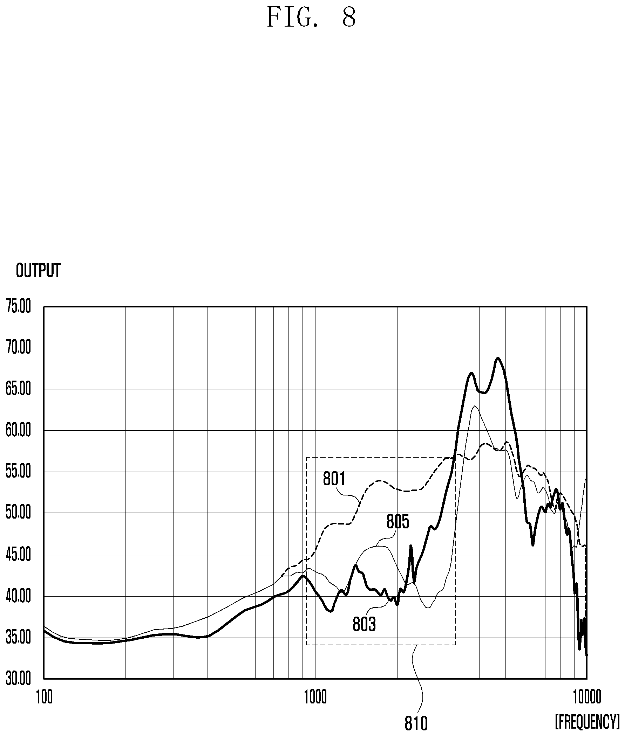

FIG. 8 is a graph illustrating a measurement result of an audio signal 805 measured by outputting a first leakage cancellation signal 803 in a first frequency band 810 by an electronic device 100 according to an embodiment of the disclosure.

FIG. 8 is a graph showing frequency on the x-axis and output (dB) on the y-axis. Referring to FIG. 8, graph 801 shows an output for each frequency band of a leaked audio signal output from the first speaker 210 in the first frequency band 810, graph 803 shows an output of an audio signal for each frequency band when multiple speakers having the same resonance frequency band experience cancellation interference, and graph 805 is a graph showing the output of an audio signal for each frequency band when the audio signal is subject to cancellation interference by a first leakage sound cancellation signal in the first frequency band 810 of the disclosure.

Referring to graph 803, it may be easy to block leakage sound from a receiver by simply generating an anti-phase signal from multiple speakers with the same resonance frequency band. Referring to graph 805, an electronic device including speakers having different resonance frequencies may control an output of an anti-phase for each frequency band, thereby blocking leakage sound from multiple speakers having the same resonance frequency band and blocking leakage sound with substantially the same performance.

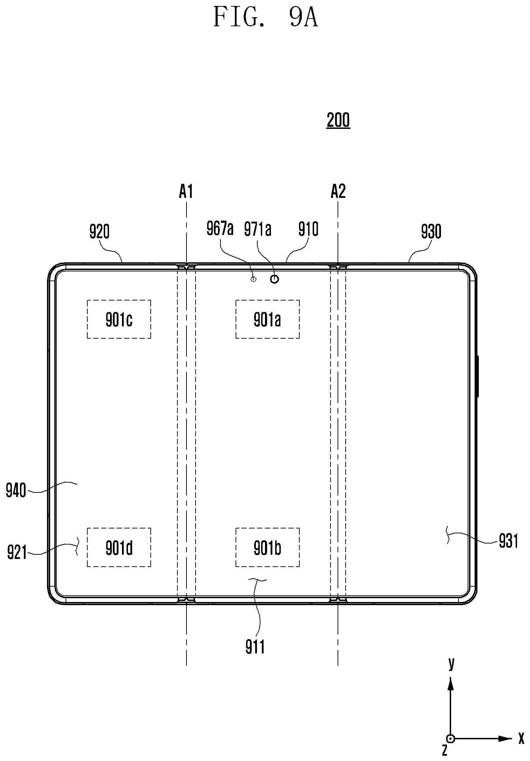

FIG. 9A is a schematic drawing illustrating an unfolded state of a multi-foldable electronic device 200 as viewed from the front according to an embodiment of the disclosure.

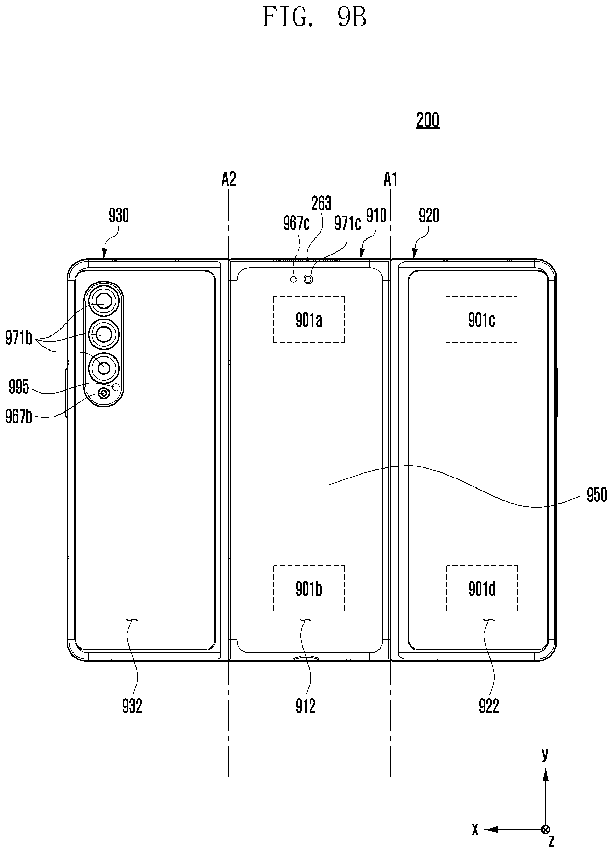

FIG. 9B is a schematic drawing illustrating an unfolded state of a multi-foldable electronic device 200 as viewed from the rear according to an embodiment of the disclosure.

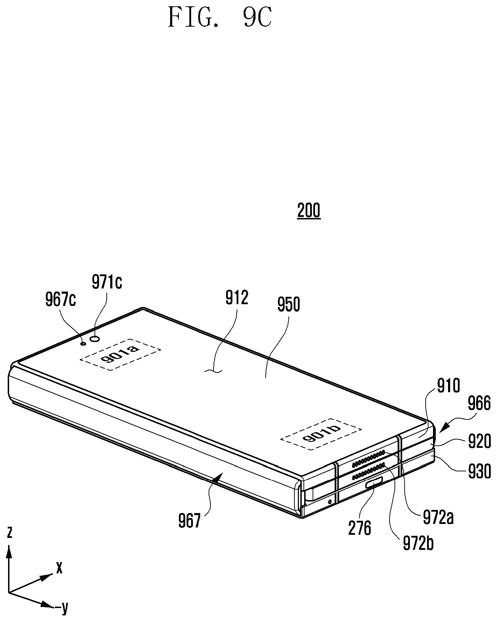

FIG. 9C is a drawing schematically illustrating a folded state of a first housing 910, a second housing 920, and a third housing 930 of a multi-foldable electronic device 200 according to an embodiment of the disclosure.

In an embodiment, the embodiments of the electronic device 100 shown in FIG. 1 may be included in embodiments of a multi-foldable electronic device 191-4 described below. For example, the multi-foldable electronic device 200 shown in FIGS. 9A, 9B, and 9C may include components including the at least one processor 110 (hereinafter, referred to as the processor 110) shown in FIG. 1, the at least one memory 120 (hereinafter, referred to as the memory 120), the at least one display 140 (hereinafter, referred to as the display 140), the at least one image sensor 150 (hereinafter, referred to as the image sensor 150), the at least one communication circuit 160 (hereinafter, referred to as the communication circuit 160), and/or at least one sensor 170 (hereinafter, referred to as the sensor 170).

Referring to FIGS. 9A and 9B, the multi-foldable electronic device 200 according to an embodiment of the disclosure may include a first housing 910, a second housing 920, a third housing 930, and/or a flexible display 940. The display 140 in FIG. 1 may include the flexible display 940.

According to an embodiment, as shown in FIGS. 9A and 9B, the first housing 910 may be disposed between the second housing 920 and the third housing 930. The second housing 920 may be coupled to a first side (e.g., the -x-axis direction) of the first housing 910 so as to be foldable and unfoldable. The third housing 930 may be coupled to a second side (e.g., the +x-axis direction) of the first housing 910 so as to be foldable and unfoldable. For example, the first housing 910 may have the first side (e.g., the -x-axis direction) operatively coupled to at least a portion of the second housing 920 through a hinge assembly, and the second side (e.g., the +x-axis direction) operatively coupled to at least a portion of the third housing 930 through a hinge assembly.

According to an embodiment, as shown in FIGS. 9A and 9B, the second housing 920 may be coupled to the first side (e.g., the -x-axis direction) of the first housing 910 to be foldable. The hinge assembly may be coupled between the first housing 910 and the second housing 920. The hinge assembly may be disposed so that the first housing 910 and the second housing 920 are foldable or unfoldable with respect to each other. According to an embodiment, the third housing 930 may be coupled to the second side (e.g., the +x-axis direction) of the first housing 910 to be foldable. The hinge assembly may be coupled between the first housing 910 and the third housing 930. The hinge assembly may be disposed so that the first housing 910 and the third housing 930 are foldable or unfoldable with respect to each other.

In an embodiment, the hinge assembly may include a first hinge housing 966 and/or a second hinge housing 967. The first hinge housing 966 may receive at least one hinge module (e.g., a hinge device or hinge structure) configured to connect the first housing 910 and the second housing 920. The second hinge housing 967 may receive at least one hinge module (e.g., a hinge device or hinge structure) configured to connect the first housing 910 and the third housing 930.

In an embodiment, the first hinge housing 966 may cover the hinge module so that the hinge module is not visible from the outside while the first housing 910 and the second housing 920 are in the fully folded state or in a state of being folded.

In an embodiment, the first hinge housing 966 may be disposed not to be visible from the outside while the first housing 910 and the second housing 920 are in the fully unfolded state.

In an embodiment, the second hinge housing 967 may cover the hinge module so that the hinge module is not visible from the outside while the first housing 910 and the third housing 930 are in the fully folded state or in a state of being folded.

In an embodiment, the second hinge housing 967 may be disposed not to be visible from the outside while the first housing 910 and the third housing 930 are in the fully unfolded state.

In an embodiment, the multi-foldable electronic device 200 may include a foldable housing (e.g., a multi-foldable housing) defined through the first housing 910, the second housing 920, the third housing 930, the first hinge housing 966, and the second hinge housing 967.

In an embodiment, the multi-foldable electronic device 200 may include a foldable housing defined through the first housing 910, the second housing 920, and the third housing 930.

In an embodiment, the multi-foldable electronic device 200 may include a flexible display 940 (e.g., a first display) disposed to be supported by the first housing 910, the second housing 920, and the third housing 930.

In an embodiment, the multi-foldable electronic device 200 may include a sub-display 950 (e.g., a second display) disposed through the first housing 910.

In an embodiment, a front surface of the multi-foldable electronic device 200 may include a surface on which the flexible display 940 is disposed. A surface opposite to the front surface of the multi-foldable electronic device 200 may include a rear surface of the multi-foldable electronic device 200.

In an embodiment, a lateral surface of the electronic device 200 may include a lateral surface surrounding a space between the front surface and the rear surface.

In an embodiment, a completely unfolded state of the first housing 910, the second housing 920, and the third housing 930 of the multi-foldable electronic device 200 may include a "first state" or a "fully unfolded state."

In an embodiment, a state in which the first housing 910, the second housing 920, and the third housing 930 are completely folded with respect to each other may include a "second state" or a "fully folded state."

In an embodiment, a state in which two of the first housing 910, the second housing 920, and the third housing 930 are folded with respect to each other may include a "third state" or an "intermediate state."

According to an embodiment, in a multi-foldable electronic device 200, the second housing 920 may be folded first with respect to the first housing 910 based on a first folding axis A1 through the hinge assembly, and the third housing 930 may be folded later with respect to the first housing 910 based on a second folding axis A2 through the hinge assembly. For example, the second housing 920 may be folded with respect to the first housing 910 through the hinge assembly in an in-folding manner. For example, the third housing 930 may be folded with respect to the first housing 910 through the hinge assembly in an in-folding manner. The in-folding may be in the form of folding inward so that the flexible display 940 faces each other.

In an embodiment, the first housing 910 and the second housing 920 may be arranged on opposite sides based on the first folding axis A1 at which the hinge assembly is disposed and may have asymmetric shapes with respect to the first folding axis A1. In an embodiment, the first housing 910 and the second housing 920 may have symmetric shapes based on the first folding axis A1. An angle or distance between the first housing 910 and the second housing 920 may vary according to whether the multi-foldable electric device 200 is in the unfolded state, the folded state, or the intermediate state.

In an embodiment, the first housing 910 and the third housing 930 may be arranged on opposite sides based on the second folding axis A2 at which the hinge assembly is disposed and may have substantially symmetric shapes with respect to the second folding axis A2. In an embodiment, the first housing 910 and the third housing 930 may have asymmetric shapes based on the second folding axis A2. An angle or distance between the first housing 910 and the third housing 930 may vary according to whether the multi-foldable electric device 200 is in the unfolded state, the folded state, or the intermediate state.

According to an embodiment, in the unfolded state of the multi-foldable electronic device 200, the first housing 910 may include the hinge assembly, and a first surface 911 disposed to face the front surface (e.g., the z-axis direction) of the multi-foldable electronic device 200, a second surface 912 facing an opposite direction of the first surface 911, and/or a lateral member configured to surround at least a portion of a first space between the first surface 911 and the second surface 912, which is connected to at least a portion of the hinge assembly.

According to an embodiment, in the unfolded state of the multi-foldable electronic device 200, the second housing 920 may include a third surface 921 disposed to face the front surface (e.g., the z-axis direction) of the multi-foldable electronic device 200, a fourth surface 922 facing an opposite direction of the third surface 921, and/or a lateral member configured to surround at least a portion of a second space between the third surface 921 and the fourth surface 922, which is connected to at least a portion of the hinge assembly.

According to an embodiment, in the unfolded state of the multi-foldable electronic device 200, the third housing 930 may include a fifth surface 931 disposed to face the front surface (e.g., the z-axis direction) of the multi-foldable electronic device 200, a sixth surface 932 facing an opposite direction of the fifth surface 931, and/or a lateral member configured to surround at least a portion of a third space between the fifth surface 931 and the sixth surface 932, which is connected to at least a portion of the hinge assembly.

In an embodiment, in the unfolded state of the multi-foldable electronic device 200, the first surface 911, the third surface 921, and the fifth surface 931 may face a substantially identical direction (e.g., the z-axis direction). In the unfolded state of the multi-foldable electronic device 200, the second surface 912, the fourth surface 922, and the sixth surface 932 may face a substantially identical direction (e.g., the -z-axis direction).

According to an embodiment, in the folded state of the first housing 910 and the second housing 920 of the multi-foldable electronic device 200, the first surface 911 and the third surface 921 may be arranged to face each other. In the folded state of the third housing 930 with respect to the first housing 910 of the multi-foldable electronic device 200, in case that the third housing 930 is disposed above (e.g., the z-axis direction) of the second housing 920, the fourth surface 922 of the second housing 920 and the fifth surface 931 of the third housing 930 may be arranged to face each other.

According to an embodiment, the multi-foldable electronic device 200 may include a recess configured to receive the flexible display 940 through structural coupling of the first housing 910, the second housing 920, and the third housing 930. The recess may have a size substantially identical to that of the flexible display 940.

In an embodiment, in case that the multi-foldable electronic device 200 is in the unfolded state, the first housing 910, the second housing 920, and the third housing 930 may have an angle of about 180°, and the flexible display 940 may be flat on the first surface 911, the third surface 921, and the fifth surface 931.

In an embodiment, the first housing 910 and the second housing 920 may configure an angle (e.g., a free stop function) that may be stopped at a designated folding angle between the folded state and the unfolded state by using the hinge assembly.

In an embodiment, the second housing 920 may also be rotated to move toward the first surface 911 (e.g., the front surface) of the first housing 910 while being pressed in an unfolding direction (e.g., the -z axis direction) based on the designated deflection angle by using the hinge assembly.

In an embodiment, the first housing 910 and the third housing 930 may configure an angle that may be stopped at a designated folding angle between the folded state and the unfolded state by using the hinge assembly.

In an embodiment, the third housing 930 may also be rotated to move toward the fourth surface 922 (e.g., the rear surface) of the second housing 920 while being pressed in an unfolding direction (e.g., the -z axis direction) based on the designated deflection angle by using the hinge assembly.

In an embodiment, the flexible display 940 may be arranged to be supported by the first surface 911 of the first housing 910, the hinge assembly, the third surface 921 of the second housing 920, the hinge assembly, and the fifth surface 931 of the third housing 930.

In an embodiment, the sub-display 950 may be disposed within an inner space of the first housing 910 to be at least partially visible from the outside through the second surface 912.

In an embodiment, the flexible display 940 may be mainly used in the unfolded state of the multi-foldable electronic device 200 and the sub-display 950 may be mainly used in the folded state of the multi-foldable electronic device 200.

In an embodiment, the multi-foldable electronic device 200 may include at least one sensor 967a, 967b, or 967c, at least one speaker 901a, 901b, 901c, or 901d, and a camera circuit 971a, 971b, or 971c.

In an embodiment, a sound output from at least one speaker 901a, 901b, 901c, or 901d may be exposed to the external environment through at least one hole (e.g., a speaker hole 972a or 972b) disposed in the first housing 910, the second housing 920, and/or the third housing 930.

In an embodiment, referring to FIGS. 9A, 9B, and 9C, the sixth speaker 901a may correspond to the first speaker 210 in FIG. 2 and the third speaker 310 in FIG. 4A.

In an embodiment, at least one of a seventh speaker 901b, an eighth speaker 901c, or a ninth speaker 901d may correspond to the second speaker 220 in FIG. 2.

For example, the multi-foldable electronic device 200 may output a call tone through the sixth speaker 901a and output a leakage sound cancellation signal according to the method shown in FIG. 5 using at least one of the seventh speaker 901b, the eighth speaker 901c, and the ninth speaker 901d.

In an embodiment, the sixth speaker 901a may output a call tone, and the eighth speaker 901c may output an anti-phase signal to cancel the call tone leakage. At least a portion of the sixth speaker 901a and the eighth speaker 901c may correspond to each other when the multi-foldable electronic device 200 is folded or in the intermediate state. The sixth speaker 901a and the eighth speaker 901c may be aligned with each other when the multi-foldable electronic device 200 is in the closed state or in the intermediate state.

In an embodiment, the sixth speaker 901a and the seventh speaker 901b may be arranged in the inner space of the first housing 910, and the eighth speaker 901c and the ninth speaker 901d may be arranged in the inner space of the second housing 920.

For example, a sound output through at least one of the seventh speaker 901b or the ninth speaker 901d may be output through the speaker hole 1072a or 1072b. A sound output through the sixth speaker 901a or the sixth speaker 901a may be output through a separate speaker hole.

According to an embodiment, the camera circuit 971a, 971b, or 971c may include a first camera circuit 971a disposed on the first surface 911 of the first housing 910, a second camera circuit 971b disposed on the sixth surface 932 of the third housing 930, and/or a third camera circuit 971c disposed on the second surface 912 of the first housing 910.

In an embodiment, the multi-foldable electronic device 200 may include a flash 995 located adjacent to the second camera circuit 971b. The flash 995 may include, for example, a light-emitting diode or a xenon lamp.

In an embodiment, the camera circuits 971a, 971b, and 971c may include one or more lenses, an image sensor, and/or an image signal processor.

In an embodiment, at least one of the camera circuits 971a, 971b, and 971c may include two or more lenses (e.g., a wide-angle and telephoto lens) and image sensors and may be together disposed on one surface of the first housing 910, the second housing 920, and/or the third housing 930. For example, the camera circuit 971a, 971b, or 971c may include the camera circuit 180 shown in FIG. 1.

In an embodiment, the sensor 967a, 967b, or 967c may generate an electrical signal or a data value corresponding to an internal operation state or external environment state of the multi-foldable electronic device 200. The sensor 967a, 967b, or 967c may include a processing circuit.

In an embodiment, the sensor 967a, 967b, or 967c may include a first sensor 967a disposed on the first surface 911 of the first housing 910, a second sensor 967b disposed on the second surface 912 of the first housing 910, and/or a third sensor 967c disposed on the sixth surface 932 of the third housing 930. For example, the sensor 967a, 967b, or 967c may include the sensor 176 shown in FIG. 1A.

In an embodiment, the multi-foldable electronic device 200 may further includes at least one of sensors that are not specified, such as a 6-axis sensor (e.g., an acceleration sensor (e.g., an accelerometer) and a gyro sensor), an angle sensor, a Hall sensor, an angular velocity sensor, a folding and unfolding detection sensor, a proximity sensor, a barometric pressure sensor, a magnetic sensor, a biosensor, a temperature sensor, a humidity sensor, a gesture sensor, a grip sensor, a color sensor, an infrared (IR) sensor, a light sensor, an ultrasonic sensor, an iris recognition sensor, a distance detection sensor (e.g., a time-of-flight (TOF) sensor, or a light detection and ranging (LiDAR) sensor), and a fingerprint recognition sensor.

In an embodiment, at least one camera circuit 971a or 971c among the camera circuits 971a, 971b, and 971c, and at least one sensor 967a or 967c among the sensors 967a, 967b, and 967c may be arranged to be exposed through the at least one display 940 or 950. For example, at least one camera circuit 971a or 971c and at least one sensor 967a or 967c may be arranged under an activation area (display area) of the at least one display 940 or 950 within an inner space of at least one housing 910, 920, or 930 and may be arranged to be in contact with the external environment through a transparent area or an opening perforated through a cover member.

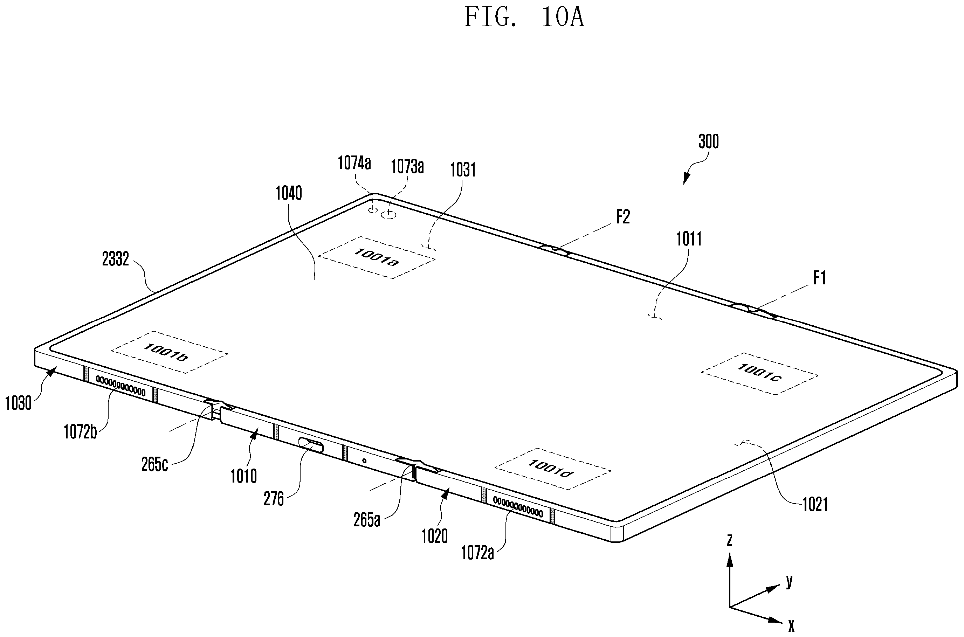

FIG. 10A is a front perspective drawing of a foldable electronic device 300 in a fully unfolded state according to various embodiments of the disclosure.

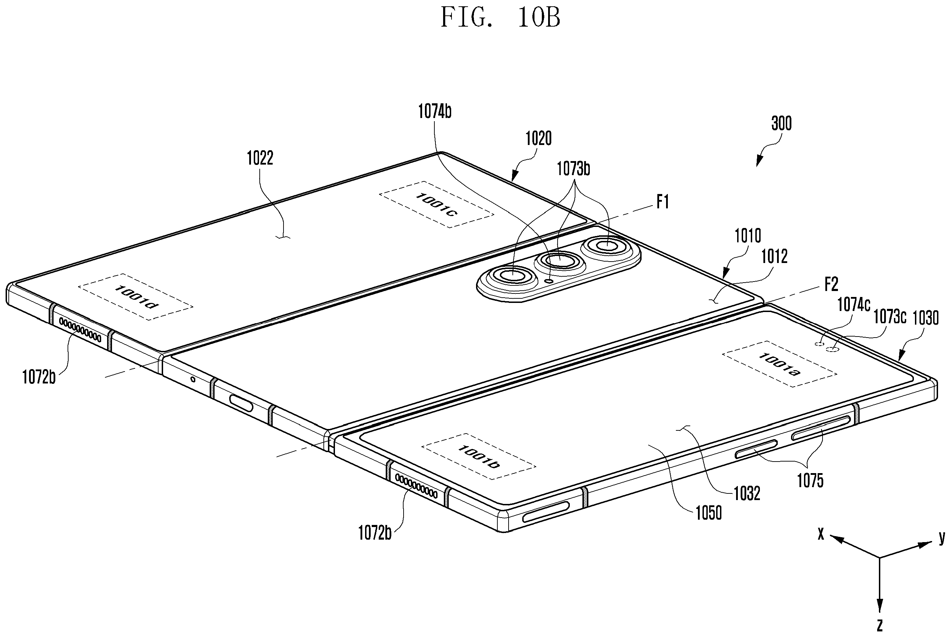

FIG. 10B is a rear perspective drawing of a foldable electronic device 300 in an unfolded state according to various embodiments of the disclosure.

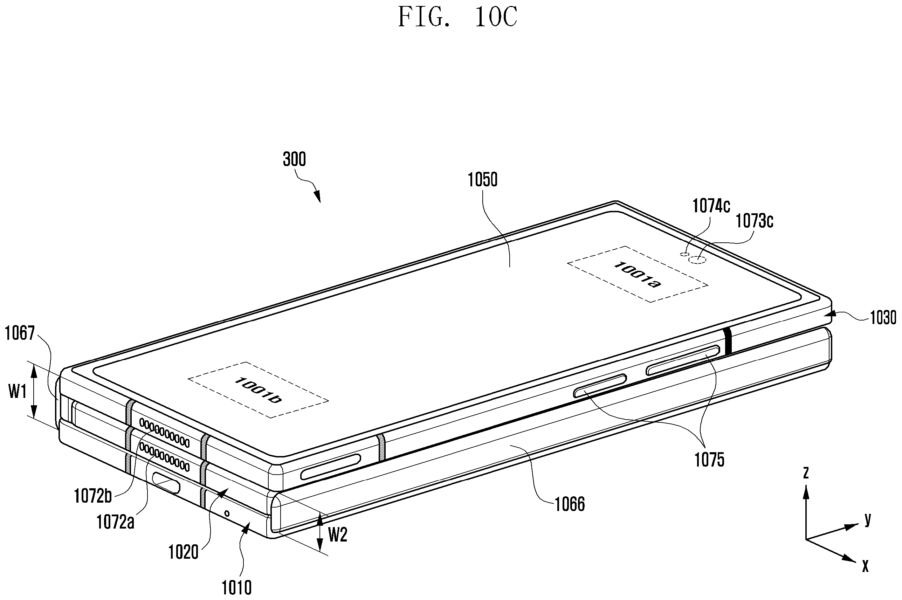

FIG. 10C is a front perspective drawing of a foldable electronic device 300 in a fully folded state according to various embodiments of the disclosure.

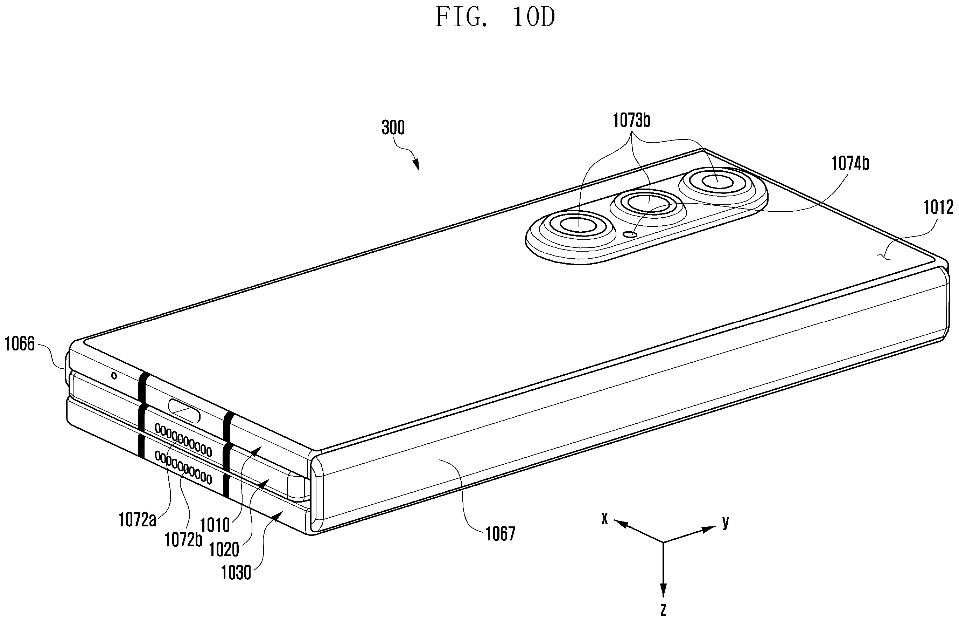

FIG. 10D is a perspective drawing of a rear surface of a foldable electronic device 300 in a folded state as viewed from various directions according to various embodiments of the disclosure.

The foldable electronic device 300 in FIGS. 10A, 10B, 10C, and 10D may be at least partially similar to the electronic device 100 in FIG. 1 or may further include other embodiments of the foldable electronic device.

In an embodiment, the embodiments of the electronic device 100 shown in FIG. 1 may be included in embodiments of a multi-foldable electronic device 191-4 described below. For example, the multi-foldable electronic device 300 disclosed in FIGS. 10A, 10B, 10C, and 10D may include components including the at least one processor 110 (hereinafter, referred to as the processor 110) shown in FIG. 1, the at least one memory 120 (hereinafter, referred to as the memory 120), the at least one display 140 (hereinafter, referred to as the display 140), the at least one image sensor 150 (hereinafter, referred to as the image sensor 150), the at least one communication circuit 160 (hereinafter, referred to as the communication circuit 160), and/or at least one sensor 170 (hereinafter, referred to as the sensor 170).

The multi-foldable electronic device 300 shown in FIGS. 10A, 10B, 10C, and 10D may differ from the multi-foldable electronic device 200 shown in FIGS. 9A, 9B, and 9C in terms of the arrangement of the housings and the folding method.

Referring to FIGS. 10A, 10B, 10C, and 10D, the foldable electronic device 300 (e.g., a portable communication device, an electronic device, or a multi-foldable electronic device) (e.g., the electronic device 100 in FIG. 1) may include a fourth housing 1010, a fifth housing 1020 connected to the fourth housing 1010 to be rotatable toward one side direction (e.g., the x-axis direction) of the fourth housing 1010 through a hinge assembly based on a first folding axis F1, and a sixth housing 1030 connected to the fourth housing 1010 to be rotatable toward the other side direction (e.g., the -x-axis direction) of the fourth housing 1010 through a hinge assembly based on a second folding axis F2.

In an embodiment, the hinge assembly may include a third hinge housing 1066 configured to receive at least one hinge device configured to connect the fourth housing 1010 and the fifth housing 1020, and the hinge assembly may include a fourth hinge housing 1067 configured to receive at least one hinge device configured to connect the fourth housing 1010 and the sixth housing 1030.

In an embodiment, the hinge device may be concealed so as not to be visible from the outside through the third hinge housing 1066 while the fourth housing 1010 and the fifth housing 1020 are in the fully folded state or in the process of being folded.

In an embodiment, the third hinge housing 1066 may be disposed not to be visible from the outside while the fourth housing 1010 and the fifth housing 1020 are in the fully unfolded state.

In an embodiment, the hinge device may be concealed so as not to be visible from the outside through the fourth hinge housing 1067 while the fourth housing 1010 and the sixth housing 1030 are in the fully folded state or in the process of being folded. In an embodiment, the fourth hinge housing 1067 may be disposed not to be visible from the outside while the fourth housing 1010 and the sixth housing 1030 are in the fully unfolded state. In an embodiment, the foldable electronic device 300 may include a foldable housing (e.g., a multi-foldable housing) defined through the fourth housing 1010, the fifth housing 1020, the sixth housing 1030, the third hinge housing 1066, and the fourth hinge housing 1067.

In an embodiment, the foldable electronic device 300 may include a foldable housing defined through the fourth housing 1010, the fifth housing 1020, and the sixth housing 1030.

In an embodiment, the foldable electronic device 300 may include a flexible display 1040 (e.g., a first display) disposed to be supported by the fourth housing 1010, the fifth housing 1020, and the sixth housing 1030.

In an embodiment, the foldable electronic device 300 may include a sub-display 1050 (e.g., a second display) disposed in the sixth housing 1030.

In an embodiment, a surface on which the flexible display 1040 is disposed may include a front surface of the foldable electronic device 300 and an opposite surface of the front surface of the foldable electronic device 300 may include a rear surface.

In an embodiment, a lateral surface of the foldable electronic device 300 may include a lateral surface surrounding a space between the front surface and the rear surface.

In an embodiment, a completely unfolded state of the fourth housing 1010, the fifth housing 1020, and the sixth housing 1030 of the foldable electronic device 300 may include a "first state" or a "fully unfolded state."

In an embodiment, a state in which the fourth housing 1010, the fifth housing 1020, and the sixth housing 1030 are completely folded with respect to each other may include a "second state" or a "fully folded state."

In an embodiment, a state in which two of the fourth housing 1010, the fifth housing 1020, and the sixth housing 1030 are folded with respect to each other may include a "third state" or an "intermediate state."

In an embodiment, the fourth housing 1010 may include a first surface 1011, a second surface 1012 facing a direction opposite to the first surface 1011, and a lateral member surrounding a space between the first surface 1011 and the second surface 1012. In an embodiment, at least a portion of the lateral member may configure at least a portion of the lateral surface of the foldable electronic device 300.

In an embodiment, the fourth housing 1010 may include a rear cover coupled to the lateral member. In an embodiment, the space may be configured by the rear cover coupled to the lateral member at the second surface 1012 of the fourth housing 1010.

In an embodiment, the fifth housing 1020 may include a third surface 1021, a fourth surface 1022 facing a direction opposite to the third surface 1021, and a lateral member surrounding a space between the third surface 1021 and the fourth surface 1022.

In an embodiment, at least a portion of the lateral member may configure at least a portion of the lateral surface of the foldable electronic device 300.

In an embodiment, the fifth housing 1020 may include a rear cover coupled to the lateral member.

In an embodiment, the sub-display 1050 may be replaced to be disposed through at least a portion of the rear cover in the fifth housing 1020.

In an embodiment, the foldable electronic device 300 may include an additional sub-display 1050 disposed through at least a portion of the rear cover in the fifth housing 1020. In this case, in a state in which the fourth housing 1010 and the fifth housing 1020 are fully folded, and the sixth housing 1030 is partially folded (e.g., a state in which the sixth housing 1030 is folded at 90 degrees with respect to the fourth housing 1010), the sub-display 1050 disposed on the fourth surface 1022 of the fifth housing 1020 may be disposed to be visible from the outside.

In an embodiment, the space may be configured by the rear cover coupled to the lateral member at the fourth surface 1022.

In an embodiment, the sixth housing 1030 may include a fifth surface 1031, a sixth surface 1032 facing a direction opposite to the fifth surface 1031, and a lateral member surrounding a space between the fifth surface 1031 and the sixth surface 1032. In an embodiment, at least a portion of the lateral member may configure at least a portion of the lateral surface of the foldable electronic device 300.

In an embodiment, the space may be configured by the rear cover coupled to the lateral member at the sixth lateral surface 2331.

In an embodiment, when the foldable electronic device 300 is in the unfolded state (e.g., the first state), it may be configured that the fourth housing 1010, the fifth housing 1020, and the sixth housing 1030 are positioned parallel to each other, so that the first surface 1011, the third surface 1021, and the fifth surface 1031 may be configured to face an identical direction.

In an embodiment, when the foldable electronic device 300 is in the folded state (e.g., the second state), it may be configured that the fourth housing 1010, the fifth housing 1020, and the sixth housing 1030 are positioned in a sequential stacked manner so that the first surface 1011 and the third surface 1021 face each other, and the fourth surface 1022 and the fifth surface 1031 face each other. In this case, the second surface 1012 and the sixth surface 1032 may be visible from the outside, while the first surface 1011, third surface 1021, fourth surface 1022, and fifth surface 1031 may be positioned so as not to be visible from the outside.

In an embodiment, the sub-display 1050 may be disposed to be visible from the outside through at least a portion of the sixth surface 1032 in the unfolded state and/or the folded state.

In an embodiment, the fourth housing 1010, the fifth housing 1020, and the sixth housing 1030 may have a different size from each other.

In an embodiment, the foldable electronic device 300 may include a rear cover disposed on the second surface 1012 of the fourth housing 1010, a rear cover disposed on the fourth surface 1022 of the fifth housing 1020, and a rear cover disposed on the sixth surface 1032 of the sixth housing 1030.

In an embodiment, at least a portion of the rear cover may be integrally formed with the lateral member 223.

In an embodiment, the rear cover may be made of a substantially transparent plate (e.g., a polymer plate or a glass plate including various coating layers) or an opaque plate.

In an embodiment, the rear cover may be made of an opaque plate such as, for example, coated or tinted glass, ceramic, polymer, metal (e.g., aluminum, stainless steel (STS), or magnesium), or a combination of at least two of the materials.

According to an embodiment, the rear cover may be made of of a substantially transparent plate such as glass or polymer. Accordingly, the sub-display 1050 may be disposed in a space of the sixth housing 1030 to be visible from the outside through the rear cover.

In an embodiment, the foldable electronic device 300 may include at least one electronic component disposed in at least one of a space of the fourth housing 1010, a space of the fifth housing 1020, and/or a space of the sixth housing 1030.

In an embodiment, the at least one electronic component may include the flexible display 1040 (e.g., the first display) disposed to be supported by the fourth housing 1010, the fifth housing 1020, and the sixth housing 1030, the sub-display 1050 (e.g., the second display) disposed in the sixth housing 1030, at least one microphone (e.g., an input module or input device), at least one speaker hole 1072a or 1072c, at least one camera 1073a, 1073b, or 1073c (e.g., a camera module or camera device), and/or at least one sensor 1074a, 1074b, or 1074c (e.g., a sensor module).

In an embodiment, the foldable electronic device 300 may additionally include at least one of other components. In an embodiment, at least one of the components described above may be omitted.

In an embodiment, the flexible display 1040 may be disposed in a reception space defined by the housings 1010, 1020, and 1030. For example, the flexible display 1040 may be disposed in a recess configured by the housings 1010, 1020, and 1030, and may be disposed to occupy substantially most of the front surface of the foldable electronic device 300 in the unfolded state. In an embodiment, the sub-display 1050 may be disposed in a space of the sixth housing 1030 to be visible from the outside through the rear cover.

In an embodiment, the at least one speaker hole 1072a or 1072b may include a first speaker hole 1072a arranged to emit sound through a lateral surface of the fifth housing 1020 and a second speaker hole 1072c arranged to emit sound through a lateral surface of the sixth housing 1030.

In an embodiment, the at least one speaker 1072a or 1072b may be symmetrically arranged to provide a stereo sound (e.g., a three-dimensional sound) in the unfolded state or the folded state of the foldable electronic device 300.

In an embodiment, the multi-foldable electronic device 200 may include at least one speaker 1001a, 1001b, 1001c, or 1001d.

In an embodiment, a sound output from the at least one speaker 1001a, 1001b, 1001c, or 1001d may be exposed to the external environment through at least one hole (e.g., the speaker hole 1072a or 1072b) disposed in the fourth housing 1010, the fifth housing 1020, and/or the sixth housing 1030.

In an embodiment, referring to FIGS. 10A, 10B, 10C, and 10D, the tenth speaker 1001a may correspond to the first speaker 210 in FIG. 2 and the third speaker 310 in FIG. 4A.

In an embodiment, at least one of a 11th speaker 1001b, a 12th speaker 1001c, or a 13th speaker 1001d may correspond to the second speaker 220 in FIG. 2.

For example, the multi-foldable electronic device 300 may output a call tone through the tenth speaker 1001a and output a leakage sound cancellation signal according to the method shown in FIG. 5 using at least one of the 11th speaker 1001b, the 12th speaker 1001c, and the 13th speaker 1001d.

In an embodiment, the tenth speaker 1001a may output a call tone, and the 12th speaker 1001c may output an anti-phase signal to cancel the call tone leakage. At least a portion of the 10th speaker 1001a and the 12th speaker 1001c may correspond to each other when the multi-foldable electronic device 300 is folded or in the intermediate state. The tenth speaker 1001a and the 12th speaker 1001c may be aligned with each other when the multi-foldable electronic device 200 is closed or in the intermediate state.

In an embodiment, the tenth speaker 1001a and the 11th speaker 1001b may be arranged in the inner space of the fourth housing 1010, and the 12th speaker 1001c and the 13th speaker 1001d may be arranged in the inner space of the fifth housing 1020.

For example, a sound output through at least one of the 11th speaker 1001b or the 13th speaker 1001d may be output through the speaker hole 1072a or 1072b. A sound output through the tenth speaker 1001a or the 12th speaker 1001c may be output through a separate speaker hole.

In an embodiment, the at least one camera 1073a, 1073b, or 1073c may be arranged in the space of the sixth housing 1030 and may include a first camera 1073a disposed through the fifth surface 1031 of the sixth housing 1030, a second camera 1073b disposed through the second surface 1012 of the fourth housing 1010, and a third camera 1073c disposed through the sixth surface of the sixth housing 1030.

In an embodiment, the at least one camera 1073a, 1073b, or 1073c may include one or more lenses, an image sensor, and/or an image signal processor. In an embodiment, the at least one camera 1073a, 1073b, or 1073c may include two or more lenses (e.g., a wide-angle and telephoto lens) and image sensors and may be together arranged on one surface of the fourth housing 1010, the fifth housing 1020, or the sixth housing 1030.

In an embodiment, the foldable electronic device 300 may include a flash (not shown) located adjacent to the second camera 1073b.

In an embodiment, the flash may include, for example, a light-emitting diode or a xenon lamp.

In an embodiment, the at least one sensor 1074a, 1074b, or 1074c may generate an electrical signal or a data value corresponding to an internal operation state or external environment state of the foldable electronic device 300.

In an embodiment, the at least one sensor 1074a, 1074b, or 1074c may include a first sensor 1074a disposed on the fifth surface 1031 of the sixth housing 1030, a second sensor 1074b disposed on the second surface 1012 of the fourth housing 1010, and/or a third sensor 1074c disposed on the sixth surface 1032 of the sixth housing 1030. In an embodiment, the at least one sensor module 1074a, 1074b, or 1074c may include at least one of a gesture sensor, a grip sensor, a color sensor, an infrared (IR) sensor, an illumination sensor, an ultrasonic sensor, an iris recognition sensor, and a distance detection sensor (e.g., a time of flight (TOF) sensor or a light detection and ranging (LiDAR) sensor).

In an embodiment, the foldable electronic device 300 may further include at least one sensor not shown in the drawings, such as a barometric pressure sensor, a magnetic sensor, a biosensor, a temperature sensor, a humidity sensor, or a fingerprint recognition sensor. In an embodiment, the fingerprint sensor may be arranged to detect a user's fingerprint through at least a portion of a key button 1075.

In an embodiment, the at least one camera 1073a, 1073b, or 1073c and/or the at least one sensor 1074a, 1074b, or 1074c may be arranged to detect the external environment through the flexible display 1040 and/or the sub-display 1050. For example, the at least one camera 1073a, 1073b, or 1073c and/or the at least one sensor 1074a, 1074b, or 1074c may be arranged under a non-active display area or active display area of the flexible display 1040 and/or the sub-display 1050 in the space of the fourth housing 1010 and/or the space of the sixth housing 1030 and arranged to be in contact with the external environment through an opening passing through a cover member (e.g., a window layer) and/or the rear cover or a transparent area.

In an embodiment, an area corresponding to at least one camera 1073a or 1073c of the flexible display 1040 and/or the sub-display 1050 may be configured as a transmission area having a predetermined transmittance rate as a part of the area for displaying content.

In an embodiment, the transmission area may be configured to have transmittance in the range of about 5 % to about 30%. The transmission area may include an area overlapping an effective area (e.g., a view-angle area) of the at least one camera 1073a or 1073c through which light for imaging to an image sensor to generate an image passes. For example, the transmission area of the flexible display 1040 and/or the sub-display 1050 may include an area having a pixel density lower than that of a peripheral area. For example, the transmission area may be substituted with an opening. For example, the at least one camera 1073a or 1073c may include an under-display camera (UDC) or an under-panel camera (UPC). According to an embodiment, some cameras 1073a or 1073c or some sensors 1074a or 1074c may be arranged to perform functions thereof without being visually exposed through the flexible display 1040 and/or the sub-display 1050. For example, an area of the flexible display 1040 and/or the sub-display 1050 corresponding to the at least one camera 1073a or 1073c and/or the at least one sensor 1074a or 1074c may not require a perforated opening.

In an embodiment, an electronic device (e.g., the electronic device 100, the multi-foldable electronic device 200 in FIG. 9A, or the multi-foldable electronic device 300 in FIG. 10A) including a speaker may include a communication circuit, a first speaker having a resonance frequency of a first value, a second speaker having a resonance frequency of a second value, and at least one processor 110, wherein instructions stored in a memory 120, when individually or collectively executed by the at least one processor 110, cause the electronic device (e.g., the electronic device 100, the multi-foldable electronic device 200 in FIG. 9A, or the multi-foldable electronic device 300 in FIG. 10A) to establish a call connection with an external electronic device (e.g., the electronic device 100, the multi-foldable electronic device 200 in FIG. 9A, or the multi-foldable electronic device 300 in FIG. 10A) through the communication circuit, convert a signal received from the external electronic device (e.g., the electronic device 100, the multi-foldable electronic device 200 in FIG. 9A, or the multi-foldable electronic device 300 in FIG. 10A) into an audio signal and output the audio signal through the first speaker, and output, through the second speaker, a leakage sound cancellation signal generated by applying at least one of a phase adjustment value or an amplitude adjustment value configured for each frequency to an anti-phase signal of the audio signal within a configured frequency band while the audio signal is output through the first speaker.

In an embodiment, the instructions, when individually or collectively executed by the at least one processor 110, may cause the electronic device (e.g., the electronic device 100, the multi-foldable electronic device 200 in FIG. 9A, or the multi-foldable electronic device 300 in FIG. 10A) to delay the leakage sound cancellation signal for a configured time period and output the leakage sound cancellation signal through the second speaker.

In an embodiment, the configured frequency band may include a first frequency band having a lower limit value corresponding to a larger value among the first value and the second value.

In an embodiment, the leakage sound cancellation signal may include a first leakage sound cancellation signal generated by applying at least one of a phase adjustment value or an amplitude adjustment value configured for each frequency to an anti-phase signal of an audio signal in a first frequency band, while the audio signal is output through the first speaker.

In an embodiment, the configured frequency band may include a second frequency band having a lower limit value greater than an upper limit value of the first frequency band, a third frequency band having an upper limit value less than a larger value among the first value and the second value and a lower limit value greater than a smaller value among the first value and second value, and a fourth frequency band having an upper limit value less than a larger value among the first value and the second value.

In an embodiment, the leakage sound cancellation signal may include at least one of a second leakage sound cancellation signal generated by applying at least one of a phase adjustment value or an amplitude adjustment value configured for each frequency to an anti-phase signal of the audio signal in a second frequency band, a third leakage sound cancellation signal generated by applying at least one of a phase adjustment value or an amplitude adjustment value configured for each frequency to an anti-phase signal of the audio signal in a third frequency band, and a fourth leakage sound cancellation signal generated by applying at least one of a phase adjustment value or an amplitude adjustment value configured for each frequency to an anti-phase signal of the audio signal in a fourth frequency band.

In an embodiment, the first speaker and the second speaker may share one magnet and include different diaphragms.

In an embodiment, the first speaker and the second speaker may include different speakers.

In an embodiment, a foldable housing including a first housing including the first speaker and a second housing connected to the first housing through a hinge and including the second speaker may be included.

In an embodiment, in case that the first housing and the second housing are in the closed state, the first speaker and the second speaker may be aligned with each other.

In an embodiment, a method for controlling an audio output of an electronic device (e.g., the electronic device 100, the multi-foldable electronic device 200 in FIG. 9A, or the multi-foldable electronic device 300 in FIG. 10A) may include an operation of establishing a call connection with an external electronic device (e.g., the electronic device 100, the multi-foldable electronic device 200 in FIG. 9A, or the multi-foldable electronic device 300 in FIG. 10A) through a communication circuit, an operation of converting a signal received from the external electronic device (e.g., the electronic device 100, the multi-foldable electronic device 200 in FIG. 9A, or the multi-foldable electronic device 300 in FIG. 10A) into an audio signal and outputting the audio signal through the first speaker, and an operation of outputting, through a second speaker, a leakage sound cancellation signal generated by applying at least one of a phase adjustment value or an amplitude adjustment value configured for each frequency within a configured frequency band to an anti-phase signal of the audio signal while the audio signal is output through a first speaker.

In an embodiment, an electronic device (e.g., the electronic device 100, the multi-foldable electronic device 200 in FIG. 9A, or the multi-foldable electronic device 300 in FIG. 10A) may include a first speaker having a resonance frequency of a first value, a second speaker having a resonance frequency of a second value different from the first value, and at least one processor 110, wherein the at least one processor 110 may cause a first leakage sound cancellation signal to be reproduced through the second speaker while an audio signal is output through the first speaker, the first leakage sound cancellation signal being generated by applying a preconfigured phase adjustment value for each frequency to an anti-phase signal of the audio signal within a preconfigured first frequency band, and a lower limit value of the first frequency band may be greater than one of the first value and the second value.

In an embodiment, the at least one processor 110 may generate the first leakage sound cancellation signal by additionally applying an amplitude adjustment value preconfigured for each frequency to an anti-phase signal of the audio signal within the first frequency band.

In an embodiment, the at least one processor 110 may cause a signal in a frequency band lower than one of the first value and the second value not to be reproduced through the second speaker while the audio signal is output through the first speaker.

In an embodiment, the first speaker and second speaker have an integrated structure that shares a single magnet, or a portable electronic device (e.g., the electronic device 100, the multi-foldable electronic device 200 in FIG. 9A, or the multi-foldable electronic device 300 in FIG. 10A) may correspond to a foldable device including a first housing and a second housing, the first housing and the second housing being connected through a hinge, the first speaker may be included in the first housing, the second speaker may be included in the second housing, and when the first housing and the second housing are in the closed state, the first speaker and the second speaker may be aligned with each other.

In an embodiment, the at least one processor 110 may cause at least one of a second leakage sound cancellation signal, a third leakage sound cancellation signal, and a fourth leakage sound cancellation signal to be additionally reproduced through the second speaker, the second leakage sound cancellation signal being generated by applying a phase adjustment value preconfigured for each frequency to an anti-phase signal of the audio signal within a preconfigured second frequency band having a lower limit value greater than an upper limit value of the first frequency band, the third leakage sound cancellation signal being generated by applying a phase adjustment value preconfigured for each frequency to an anti-phase signal of the audio signal within a preconfigured third frequency band having an upper limit value less than a larger value among the first value and the second value and a lower limit value greater than a smaller value among the first value and the second value, and the fourth leakage sound cancellation signal being generated by applying a phase adjustment value preconfigured for each frequency to an anti-phase signal of the audio signal within a preconfigured fourth frequency band having an upper limit value less than a smaller value among the first value and the second value.

In an embodiment, an electronic device (e.g., the electronic device 100, the multi-foldable electronic device 200 in FIG. 9A, or the multi-foldable electronic device 300 in FIG. 10A) may include a first speaker having a resonance frequency of a first value, a second speaker having a resonance frequency of a second value different from the first value, and at least one processor 110, wherein while the electronic device (e.g., the electronic device 100, the multi-foldable electronic device 200 in FIG. 9A, or the multi-foldable electronic device 300 in FIG. 10A) is in call mode, and a portable electronic device (e.g., the electronic device 100, the multi-foldable electronic device 200 in FIG. 9A, or the multi-foldable electronic device 300 in FIG. 10A) converts a signal received from another electronic device (e.g., the electronic device 100, the multi-foldable electronic device 200 in FIG. 9A, or the multi-foldable electronic device 300 in FIG. 10A) into an audio signal and outputs the audio signal through the first speaker, the at least one processor 110 may reproduce, through the second speaker, a first leakage sound cancellation signal generated by applying a preconfigured phase adjustment value for each frequency to an anti-phase signal of the audio signal within a preconfigured first frequency band.

The electronic device according to an embodiment may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". The "module" may be a single integrated component, or a minimum unit or part thereof, adapted to perform one or more functions. For example, according to an embodiment, the "module" may be implemented in the form of an application-specific integrated circuit (ASIC).

An embodiment as set forth herein may be implemented as software (e.g., a program) including one or more instructions that are stored in a storage medium (e.g., an internal memory or external memory) that is readable by a machine (e.g., the electronic device 100). For example, a processor (e.g., the processor 100) of the machine (e.g., the electronic device 120) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may also be separately disposed in another element. According to an embodiment, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device (100)comprising:
a communication circuit;
a first speaker (210) having a resonance frequency of a first value;
a second speaker (220) having a resonance frequency of a second value; and
at least one processor (110),
wherein instructions stored in a memory (120), when individually or collectively executed by the at least one processor (110), cause the electronic device (100) to:
establish a call connection with an external electronic device through the communication circuit;
convert a signal received from the external electronic device into an audio signal and output the audio signal through the first speaker (210); and
output, through the second speaker (220), a leakage sound cancellation signal generated by applying at least one of a phase adjustment value or an amplitude adjustment value configured for each frequency to an anti-phase signal of the audio signal within a configured frequency band while the audio signal is output through the first speaker (210).

2. The electronic device (100) of claim 1, wherein the instructions, when individually or collectively executed by the at least one processor (110), cause the electronic device (100) to delay the leakage sound cancellation signal by a configured time period and output the leakage sound cancellation signal through the second speaker (210).

3. The electronic device (100) of claim 1, wherein the configured frequency band comprises a first frequency band having a lower limit value corresponding to a larger value among the first value and the second value.

4. The electronic device (100) of claim 3, wherein the leakage sound cancellation signal comprises a first leakage sound cancellation signal generated by applying at least one of a phase adjustment value or an amplitude adjustment value configured for each frequency to an anti-phase signal of the audio signal in the first frequency band while the audio signal is output through the first speaker (210).

5. The electronic device (100) of claim 3, wherein the configured frequency band comprises:
a second frequency band having a lower limit value greater than an upper limit value of the first frequency band;
a third frequency band having an upper limit value less than a larger value among the first value and the second value and a lower limit value greater than a smaller value among the first value and the second value; and
a fourth frequency band having an upper limit value less than a larger value among the first value and the second value.

6. The electronic device (100) of claim 5, wherein the leakage sound cancellation signal comprises at least one of:
a second leakage sound cancellation signal generated by applying at least one of a phase adjustment value or an amplitude adjustment value configured for each frequency to an anti-phase signal of the audio signal in the second frequency band;
a third leakage sound cancellation signal generated by applying at least one of a phase adjustment value or an amplitude adjustment value configured for each frequency to an anti-phase signal of the audio signal in the third frequency band; and
a fourth leakage sound cancellation signal generated by applying at least one of a phase adjustment value or an amplitude adjustment value configured for each frequency to an anti-phase signal of the audio signal in the fourth frequency band.

7. The electronic device (100) of claim 1, wherein the first speaker (210) and the second speaker (220) share a single magnet and comprise different diaphragms.

8. The electronic device (100) of claim 1, wherein the first speaker (210) and the second speaker (220) comprise different speakers.

9. The electronic device (100) of claim 1, comprising a foldable housing comprising:
a first housing (910) comprising the first speaker (210); and
a second housing (920) connected to the first housing (910) through a hinge and comprising the second speaker (220),
wherein, in case that the first housing (910) and the second housing (920) are in a closed state, the first speaker (210) and the second speaker (220) are aligned with each other.

10. A method for controlling an audio output of an electronic device (100), the method comprising:
establishing (501) a call connection with an external electronic device through a communication circuit;
converting (503) a signal received from the external electronic device into an audio signal and outputting the audio signal through the first speaker (210); and
outputting (505), through a second speaker (220), a leakage sound cancellation signal generated by applying at least one of a phase adjustment value or an amplitude adjustment value configured for each frequency to an anti-phase signal of the audio signal within a configured frequency band while the audio signal is output through the first speaker (210).

11. The method of claim 10, wherein the configured frequency band comprises a first frequency band having a lower limit value corresponding to a larger value among the first value and the second value.

12. The method of claim 11, wherein the leakage sound cancellation signal comprises a first leakage sound cancellation signal generated by applying at least one of a phase adjustment value or an amplitude adjustment value configured for each frequency to an anti-phase signal of the audio signal in the first frequency band while the audio signal is output through the first speaker (210).

13. The method of claim 11, wherein the configured frequency band comprises:
a second frequency band having a lower limit value greater than an upper limit value of the first frequency band;
a third frequency band having an upper limit value less than a larger value among the first value and the second value and a lower limit value greater than a smaller value among the first value and the second value; and
a fourth frequency band having an upper limit value less than a larger value among the first value and the second value.

14. The method of claim 13, wherein the leakage sound cancellation signal comprises at least one of:
a second leakage sound cancellation signal generated by applying at least one of a phase adjustment value or an amplitude adjustment value configured for each frequency to an anti-phase signal of the audio signal in the second frequency band;
a third leakage sound cancellation signal generated by applying at least one of a phase adjustment value or an amplitude adjustment value configured for each frequency to an anti-phase signal of the audio signal in the third frequency band; and
a fourth leakage sound cancellation signal generated by applying at least one of a phase adjustment value or an amplitude adjustment value configured for each frequency to an anti-phase signal of the audio signal in the third frequency band.

15. The method of claim of claim 10, wherein the first speaker (210) and the second speaker (220) share a single magnet and comprise different diaphragms.
